# EUROPEAN PATENT SPECIFICATION

(11) **EP 1 662 101 B1**
(45) Date of publication and mention of the grant of the patent: **13.08.2008**
(21) Application number: 05025038.0
(22) Date of filing: 16.11.2005
(51) Int. Cl.: F01N 3/023, F01N 3/025, F01N 3/035, F01N 9/00, F01N 11/00, F02D 41/40, F02D 41/02

(54) **Exhaust emission control device of internal combustion engine**
Abgaskontrollvorrichtung für Brennkraftmaschinen
Dispositif de réglage d'émission de gaz d'échappement dans un moteur à combustion interne

(30) Priority: 19.11.2004 JP 2004335481
(43) Date of publication of application: 31.05.2006
(73) Proprietor: MITSUBISHI JIDOSHA KOGYO KABUSHIKI KAISHA, Tokyo 108-8410 (JP)
(72) Inventor: Kurata, Kazuo, Minato-ku, Tokyo (JP); Iizuka, Akira, Minato-ku, Tokyo (JP); Kondo, Koji, Minato-ku, Tokyo (JP); Shigahara, Kei, Minato-ku, Tokyo (JP)
(74) Representative: Vossius & Partner

(56) References cited:
- WO-A-20/05088094
- FR-A- 2 829 526
- US-A- 5 207 990
- PATENT ABSTRACTS OF JAPAN vol. 2003, no. 09, 3 September 2003 (2003-09-03) & JP 2003 155913 A (HINO MOTORS LTD), 30 May 2003 (2003-05-30)

## Description

This invention relates to a method of controlling an exhaust emission control device of an internal combustion engine (hereinafter referred to simply as engine) and, more particularly, to a method of controlling an exhaust emission control device having a diesel particulate filter (hereinafter referred to simply as DPF) in an exhaust system of a diesel engine.

An exhaust gas discharged from a diesel engine contains contaminants, such as hydrocarbons (HC), carbon hydroxide (CO), nitrogen oxides (NOx), and particulate matter (PM; hereinafter simply called particulate). To suppress air pollution by these substances, combustion techniques such as exhaust gas recirculation (hereinafter referred to as EGR) and common-rail type high pressure fuel injection, or post-treatment techniques using a diesel oxidation catalyst (hereinafter referred to simply as DOC) or DPF have been developed.

DPF is a filter, installed midway through an exhaust pipe of the engine, for directly trapping particulate in the exhaust gas. DPF includes a monolithic honeycomb type wall flow type filter made of ceramic, and a fiber type filter formed of a ceramic or a metal in fibrous form.

However, as DPF traps particulate, clogging proceeds, and the pressure of the exhaust gas (exhaust pressure) rises. Thus, so-called forced regeneration, which is a procedure for periodically removing trapped and accumulated particulate, is necessary.

A conventional method of the forced regeneration comprises raising the exhaust gas temperature of the engine by retarding the timing of fuel injection, or causing heat generation by HC supply to DOC (provided at a stage forward of DPF) associated with post-injection of fuel, thereby raising the DPF temperature generally to 600°C or higher to burn and remove the particulate.

In connection with the above-mentioned method of forced regeneration, which utilizes heat generation by HC supply to DOC associated with post-injection of fuel, thereby raising the DPF temperature, a control system is contemplated in which the amount of HC (fuel) added is an input, and the exhaust gas temperature at the outlet of DOC is an output. This system is a very slow system because of the great heat capacity of DOC, posing the problem of extreme difficulty in exercising control. If the amount of overshoot of the control temperature is large, for example, it is likely that the particulate accumulated in DPF will begin to burn vigorously until its temperature exceeds the heat resistant temperature of DPF, eventually damaging DPF. Thus, accurate temperature control is required.

Japanese Patent Application Laid-Open No. 2003-155913 discloses an exhaust emission control method and apparatus which stop the addition of fuel to DOC, if the DPF temperature (catalyst bed temperature) exceeds a predetermined value (or the temperature rise gradient exceeds a predetermined gradient), thereby suppressing an excessive rise (overshoot) of the DPF temperature.

With the exhaust emission control method and apparatus of Japanese Patent Application Laid-Open No. 2003-155913, however, temperature control after the DPF temperature exceeds the predetermined value is not exercised, and the following problem occurs: Even when the temperature of DPF is to be raised by a heating means (DOC), such as fuel addition, at the time of restoring the DPF temperature raise because of a temperature fall, the temperature of DPF excessively lowers owing to a delay in the reaction of the heating means. Thus, the temperature does not rise favorably, and much time is taken until the regeneration of DPF is actually started. Moreover, control for raising the temperature is discontinued, if the DPF temperature exceeds the predetermined temperature, or if the temperature rise gradient exceeds the predetermined gradient. However, a response to (result of) the control for temperature raise before discontinuation of this control is not reflected in next control for raising the temperature, thus presenting the problem that DPF may be overheated.

WO2005/088094 discloses a regeneration controller for an exhaust purification apparatus of an internal combustion engine, in which the timing of ending the temperature raising control is determined in accordance with the exhaust temperature and the elapsed time when the temperature raising control is exercised, and/or the timing of starting the temperature raising control is determined in accordance with the exhaust temperature and the elapsed time when the temperature raising control is not exercised.

The present invention has been accomplished in the light of the above-mentioned problems. It is an object of the present invention to provide a method of controlling an exhaust emission control device of an internal combustion engine, which can promptly and accurately control the filter to a temperature range where the filter can be regenerated, while reducing the amount of undershoot during temperature control for forced regeneration of the filter, and which can also decrease a fuel injection volume required for the temperature rise of the filter.

This object can be achieved by the features defined in the claims.

According to the features of the present invention, when the filter temperature is the predetermined temperature or higher, and the temperature falls, control for temperature raise of the filter is restored. Thus, undershoot (excessive fall in temperature) can be suppressed, and the filter can be controlled promptly and accurately to a temperature range where the filter can be regenerated. Moreover, a fuel injection volume required for temperature raise of the filter at the time of restoring temperature raise control can be decreased. Consequently, fuel economy is improved.

According to the preferable features of the present invention, if a fall in the temperature of the filter is detected, and if the filter temperature falls short of a temperature raise restoration temperature set to be higher than the predetermined temperature, control for raising the temperature of the filter is restored. Thus, the filter can be controlled promptly and accurately to a temperature range where the filter can be regenerated, with an excessive rise in the temperature of the filter being prevented.

According to further prefeable features of the present invention, a control amount of the temperature raising means, at a time of restoration of temperature raise control, is set in accordance with a maximum of the filter temperature during stoppage of temperature raise control. Thus, the filter can be controlled promptly and accurately to a temperature range where the filter can be regenerated, with the range of hunting being narrowed.

The present invention will become more fully understood from the detailed description given hereinbelow and the accompanying drawings which are given by way of illustration only, and thus are not limitative of the present invention, and wherein:
FIG. 1 is a schematic configurational drawing of an exhaust emission control device of a diesel engine showing an embodiment of the present invention; and
FIG. 2 is a graph showing an example of temperature control over DPF.

A method of controlling an exhaust emission control device of an internal combustion engine according to the present invention will now be described in detail by an embodiment with reference to the accompanying drawings, but this embodiment does not limit the present invention.

### Embodiment

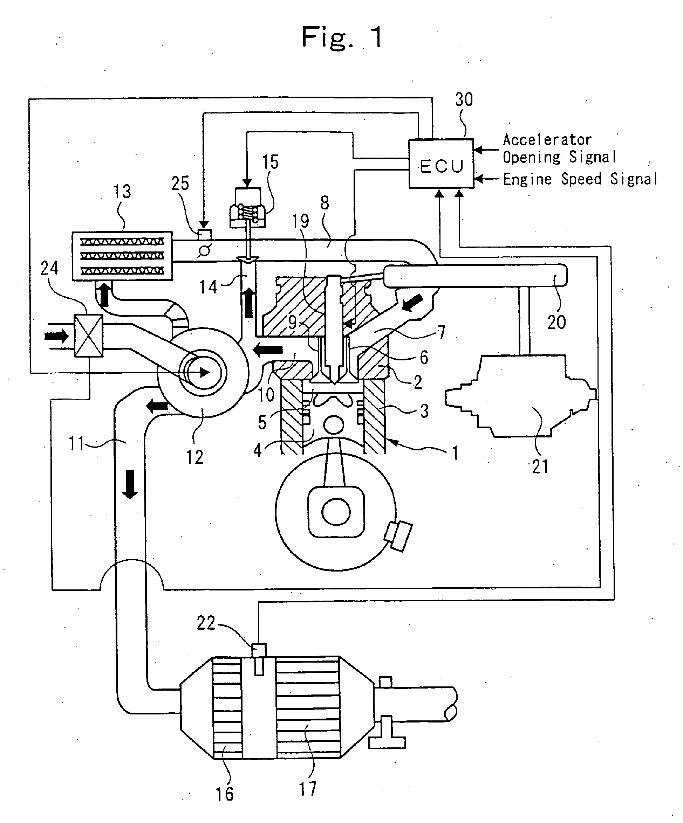

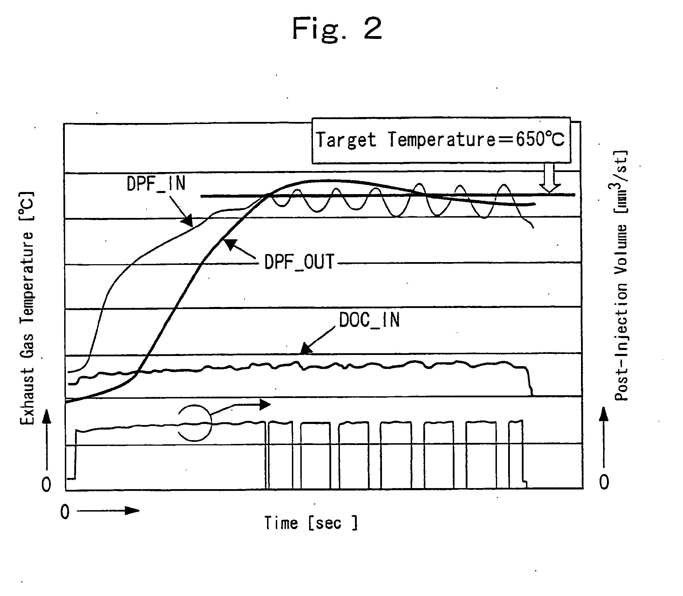

FIG. 1 is a schematic configurational drawing of an exhaust emission control device of a diesel engine showing an embodiment of the present invention. FIG. 2 is a graph showing an example of temperature control over DPF.

As shown in FIG. 1, a multi-cylinder diesel engine (hereinafter referred to as an engine) 1 has a cylinder head 2 and a cylinder block 3. A piston 4 is accommodated in each cylinder bore of the cylinder block 3 so as to be movable in a reciprocating manner. A combustion chamber 5 is formed by the top face of the piston, the wall surface of the cylinder bore, and the lower surface of the cylinder head.

An intake port 7 to be opened and closed by an intake valve 6 is formed in the cylinder head 2, and an intake passage 8 including an intake manifold is connected to the intake port 7. Moreover, an exhaust port 10 to be opened and closed by an exhaust valve 9 is formed in the cylinder head 2, and an exhaust passage 11 including an exhaust manifold is connected to the exhaust port 10.

A variable capacity turbocharger (hereinafter referred to as VGT) 12 is interposed between the intake passage 8 and the exhaust passage 11, and intake air pressurized thereby is cooled by an intercooler 13 for supply to the combustion chamber 5. The intake passage 8 downstream of the intercooler 13 and the exhaust passage 11 upstream of the VGT 12 are connected by an EGR passage 14, and the amount of EGR is controlled by an EGR valve 15 interposed in the EGR passage 14. In the exhaust passage 11 downstream of the VGT 12, a DOC 16 and a DPF (filter) 17 are interposed in this sequence in the direction of an exhaust gas flow.

An electronic controlled fuel injection valve 19 for directly injecting fuel into the combustion chamber 5 of each cylinder is provided in the cylinder head 2. A high pressure fuel controlled to a predetermined fuel pressure is supplied from a common-rail 20 to the fuel injection valve 19. In the drawing, the numeral 21 denotes a fuel supply pump which supplies fuel from a fuel tank (not shown) to the common-rail 20, and which is rotationally driven in association with the engine 1.

The fuel injection valve 19 is driven and controlled by an electronic control unit (hereinafter referred to as ECU) 30. That is, the ECU 30 receives an accelerator opening signal from a sensor for detecting the opening of an accelerator, and an engine speed signal from a sensor for detecting an engine speed (and a crank angle). Based on these signals on the accelerator opening and the engine speed, the ECU 30 retrieves a target fuel injection volume and a target injection timing, and determines the opening and closing timings of an electromagnetic valve in the fuel injection valve 19 so that these targeted fuel injection volume and injection timing are realized.

The ECU 30 also receives detection signals from a temperature sensor (filter temperature detection means) 22 mounted on the inlet of the DPF 17 for detecting the temperature of the DPF 17. As the filter temperature detection means, it is permissible to detect the temperature of the DPF directly, or detect this temperature by estimation based on the operating state or the temperature in the vicinity of the DPF. The numeral 25 in the drawing denotes an electronic controlled throttle valve which is driven and controlled by the ECU 30 in accordance with the operating state of the engine as are the aforementioned EGR valve 15 and VGT 12 (vane opening).

Assume that a normal mode is switched to a forced regeneration mode (control), which performs the forced regeneration of the DPF 17, during vehicle driving, and control for temperature raise of the DPF 17 is effected by post-injection of fuel (constitutes a temperature raising means along with the DOC 16, but may be exhaust-stroke injection). If, at this time, the DPF temperature detected by the temperature sensor 22 reaches the target temperature (predetermined temperature) or higher, the ECU 30 terminates the post-injection. If the DPF temperature is the target temperature or above and the temperature gradient (change rate per unit time) takes a negative value at which the temperature lowers, the ECU 30 restores the post-injection (filter regeneration determination means).

That is, when control for the temperature raise of the DPF 17 is started, time is taken until the temperature of the DPF 17 actually rises. Thus, if temperature raise control is started after the temperature falls short of the target temperature, the temperature of the DPF 17 becomes so low that forced regeneration of the DPF 17 makes a late start. The ECU 30 makes up for this drawback. Particularly in the case of temperature raise by the DOC 16, the reaction time in the DOC 16 needs to compensate for the marked lateness of the temperature rise of the DOC 16 itself. In the forcedregenerationmode, therefore, the fuel injection valve 19 is driven and controlled such that main injection of fuel performed in the vicinity of the compression top dead center of the piston 4 (crank angle 0°) is followed by post-injection performed with a timing at which there is no ignition later than the compression top dead center. Upon this post-injection, the unburned fuel (HC) is added into the exhaust gas, and the unburned fuel undergoes an oxidation reaction in the DOC 16 located at the stage forward of the DPF 17. By the heat of the reaction, the temperature of the catalyst bed is raised to burn and remove the particulate trapped and accumulated in the DPF 17. The aforementioned switching from the normal mode to the forced regeneration mode in the ECU 30 may be carried out periodically at appropriate intervals, but the switching of the mode may be performed by evaluating the trapping state of the DPF 17 based on the pre-DPF/post-DPF differential pressure, or by estimating the amount of trapping from operating records.

In the present invention, as described above, even after post-injection is once stopped when the DPF temperature reaches the target (predetermined) temperature or above under temperature control during forced regeneration of DPF, post-injection is restored if the temperature gradient of the DPF temperature takes a negative value. Thus, undershoot (excessive fall in temperature) can be suppressed, and the DPF 17 can be controlled promptly and accurately to a temperature range where the DPF 17 can be regenerated. Moreover, a fuel injection volume required for next post-injection can be decreased. Consequently, fuel economy is improved (see a graph showing an example of temperature control over DPF in FIG. 2).

Even when the temperature gradient of the DPF temperature has a negative value, post-injection is restored if the temperature is lower than a predetermined value (temperature raise restoration temperature) set to be higher than the above-mentioned target temperature. Thus, the DPF 17 can be controlled promptly and accurately to a temperature range where the DPF 17 can be regenerated, with an excessive rise in the temperature of the DPF 17 being prevented.

Furthermore, the fuel injection volume (control amount) at the time of restoration of post-injection is corrected in accordance with the maximum temperature present after the DPF temperature has become the target temperature or above and before the restoration of post-injection (namely, the initial value determined in the operating region of the engine is corrected with the overshoot amount). Thus, the DPF 17 can be controlled promptly and accurately to a temperature range where the DPF 17 can be regenerated, with the range of hunting being narrowed.

While the present invention has been described by the above embodiment, it is to be understood that the invention is not limited to this embodiment, but may be varied in many other ways. For example, a temperature raising means which causes delay in temperature raise control may be used instead of the DOC 16 as a means for raising the temperature of the DPF 17. In this case, the same effects are obtained. Of course, the DOC 16 may be integrally supported, as a carrier, on the DPF 17. Furthermore, the fuel injection volume (control amount) at the time of restoration of post-injection may be set in accordance with the deviation between the maximum temperature and the target temperature mentioned above. Such variations are not to be regarded as a departure from the scope of the invention, and all such modifications as would be obvious to one skilled in the art are intended to be included within the scope of the appended claims.

## Claims

1. A method of controlling an exhaust gas emission control device of an internal combustion engine, comprising:
a filter (17), provided in an exhaust passage (11) of the internal combustion engine (1), for trapping a particulate in an exhaust gas;
filter regeneration determination means (30) for determining whether regeneration of the filter (17) is necessary or not;
temperature raising control means (16, 30) for raising a temperature of the filter (17) when the filter regeneration determination means (30) determines that the regeneration of the filter (17) is necessary; and
filter temperature detection means (22) for detecting a temperature of the filter (17) or a neighborhood of the filter (17), and
wherein, when the temperature of the filter (17) detected by the filter temperature detection means (22) becomes a first predetermined temperature or higher and control for raising the temperature of the filter (17) by the temperature raising control means (16, 30) is exercised, the control for raising the temperature by the temperature raising control means (16, 30) is stopped,
**characterized in that**, when the temperature detection means (16, 30) detects a negative temperature gradient and the temperature detected by the filter temperature detection means (22) is the first predetermined temperature or higher, the temperature raising control means (16, 30) restores the control for raising the temperature of the filter (17).

2. A method of controlling a exhaust gas emission control device of an internal combustion engine according to claim 1, **characterized in that** when the temperature detection means (16, 30) detects that the temperature of the filter (17) is lower that a second predetermined temperature set to be higher than the first predetermined temperature, and that the temperature gradient takes a negative value, the temperature raising control means (16, 30) restores the control for raising the temperature of the filter (17).

3. A method of controlling a exhaust gas emission control device of an internal combustion engine according to claim 1 or 2, **characterized in that** the temperature raising control means (16, 30) exercises the control for raising the temperature of the filter (17) such that a difference between the predetermined temperature and a maximum of the temperature of the filter (17) while the control for raising the temperature of the filter (17) is stopped after the temperature of the filter (17) has become the first predetermined temperature or higher is decreased.

## Patentansprüche

1. Verfahren zum Steuern einer Abgasemissions-Steuervorrichtung einer Brennkraftmaschine, aufweisend:
ein Filter (17), das in einem Abgaskanal (11) der Brennkraftmaschine (1) bereitgestellt ist, um Partikel in einem Abgas abzufangen;
eine Filterregenerations-Ermittlungseinrichtung (30) zum Ermitteln, ob eine Regeneration des Filters (17) erforderlich ist oder nicht;
eine Temperaturerhöhungs-Steuereinrichtung (16, 30) zum Erhöhen einer Temperatur des Filters (17), wenn die Filterregenerations-Ermittlungseinrichtung (30) ermittelt, dass die Regeneration des Filters (17) erforderlich ist; und
eine Filtertemperatur-Detektionseinrichtung (22) zum Detektieren einer Temperatur des Filters (17) oder einer Umgebung des Filters (17), und
wobei, wenn die von der Filtertemperatur-Detektionseinrichtung (22) detektierte Temperatur des Filters (17) zu einer ersten vorbestimmten Temperatur oder höher wird und eine Steuerung zum Erhöhen der Temperatur des Filters (17) durch die Temperaturerhöhungs-Steuereinrichtung (16, 30) ausgeführt wird, die Steuerung zur Erhöhung der Temperatur durch die Temperaturerhöhungs-Steuereinrichtung (16, 30) beendet wird,
**dadurch gekennzeichnet, dass**
wenn die Temperaturdetektionseinrichtung (16, 30) einen negativen Temperaturgradienten detektiert und die durch die Filtertemperatur-Detektionseinrichtung (22) detektierte Temperatur die erste vorbestimmte Temperatur oder höher ist, die Temperaturerhöhungs-Steuereinrichtung (16, 30) die Steuerung zur Erhöhung der Temperatur des Filters (17) wieder aufnimmt.

2. Verfahren zum Steuern einer Abgasemissions-Steuervorrichtung einer Brennkraftmaschine nach Anspruch 1, **dadurch gekennzeichnet, dass**, wenn die Temperaturdetektionseinrichtung (16, 30) detektiert, dass die Temperatur des Filters (17) niedriger als eine zweite vorbestimmte Temperatur, die höher als die erste vorbestimmte Temperatur festgelegt ist, und dass der Temperaturgradient einen negativen Wert annimmt, die Temperaturerhöhungs-Steuereinrichtung (16, 30) die Steuerung zur Erhöhung der Temperatur des Filters (17) wieder aufnimmt.

3. Verfahren zum Steuern einer Abgasemissions-Steuervorrichtung einer Brennkraftmaschine nach Anspruch 1 oder 2, **dadurch gekennzeichnet, dass** die Temperaturerhöhungs-Steuereinrichtung (16, 30) die Steuerung zur Erhöhung der Temperatur des Filters (17) so ausführt, dass eine Differenz zwischen der vorbestimmten Temperatur und einer Maximaltemperatur des Filters (17) während die Steuerung zur Erhöhung der Temperatur des Filters (17) angehalten ist, nachdem die Temperatur des Filters (17) die erste vorbestimmte Temperatur oder höher erreicht hat, verringert wird.

## Revendications

1. Procédé de commande d'un dispositif de contrôle d'émission de gaz d'échappement d'un moteur à combustion interne, comprenant :
un filtre (17), prévu dans un passage d'échappement (11) du moteur à combinaison interne (1), pour piéger une matière particulaire dans un gaz d'échappement ;
un moyen de détermination de régénération de filtre (30) pour déterminer si la régénération du filtre (17) est nécessaire ou pas ;
un moyen de commande d'élévation de température (16, 30) pour élever une température du filtre (17) lorsque le moyen de détermination de régénération de filtre (30) détermine que la régénération du filtre (17) est nécessaire ; et
un moyen de détection de température de filtre (22) pour détecter une température du filtre (17) ou un voisinage du filtre (17), et
dans lequel, lorsque la température du filtre (17) détectée par le moyen de détection de température de filtre (22) devient une première température prédéterminée ou une température supérieure et qu'une commande pour élever la température du filtre (17) par le moyen de commande d'élévation de température (16, 30) est exercée, la commande pour élever la température par le moyen de commande d'élévation de température (16, 30) est interrompue,
**caractérisé en ce que**, lorsque le moyen de détection de température (16, 30) détecte un gradient température négatif et que la température détectée par le moyen de détection de température de filtre (22) est la première température prédéterminée ou une température supérieure, le moyen de commande d'élévation de température (16, 30) rétablit la commande pour élever la température du filtre (17).

2. Procédé de commande d'un dispositif de contrôle d'émission de gaz d'échappement d'un moteur à combustion interne selon la revendication 1, **caractérisé en ce que**, lorsque le moyen de détection de température (16, 30) détecte que la température du filtre (17) est inférieure à une seconde température prédéterminée définie comme étant supérieure à la première température prédéterminée, et que le gradient de température prend une valeur négative, le moyen de commande d'élévation de température (16, 30) rétablit la commande pour élever la température du filtre (17).

3. Procédé de commande d'un dispositif de contrôle d'émission de gaz d'échappement d'un moteur à combustion interne selon la revendication 1 ou 2, **caractérisé en ce que** le moyen de commande d'élévation de température (16, 30) exerce la commande pour élever la température du filtre (17) de sorte qu'une différence entre la température prédéterminée et un maximum de la température du filtre (17) lorsque la commande pour élever la température du filtre (17) est interrompue, après que la température du filtre (17) est devenue la première température prédéterminée ou une température supérieure, soit diminuée.
